# EUROPEAN PATENT APPLICATION

(11) **EP 2 685 406 A1**
(43) Date of publication of application: **15.01.2014**
(21) Application number: 12176158.9
(22) Date of filing: 12.07.2012
(51) Int. Cl.: G06K 19/067, H03H 9/02

(54) **Electro-acoustic component and electro-acoustic transponder having an electro-acoustic component**

(71) Applicant: CTR Carinthian Tech Research AG, 9524 Villach/St. Magdalen (AT)
(72) Inventor: Nicolay, Pascal Dr., 9500 VILLACH (AT); Binder, Alfred Dr., 9523 LANDSKRON (AT)
(74) Representative: Epping - Hermann - Fischer

(57) **Abstract**

An electro-acoustic component that may be used for wireless sensor applications and a transponder comprising such an electro-acoustic component is provided. The electro-acoustic component comprises an electro-acoustic transducer and a piezoelectric layer in an acoustic track on a piezoelectric substrate.

## Description

The present invention refers to electro-acoustic components, e.g. for use in sensors working with acoustic waves, and to electro-acoustic transponders having an electro-acoustic component and being able to communicate via a wireless terminal.

### Background of the invention

Sensors, e.g. temperature or pressure sensors, are omnipresent in modern technology. There are cable-bound sensors, but the technological trends demand for sensors that can be interrogated wirelessly, e.g. automobile tire pressure sensors.

RFID-tags are an example for wirelessly interrogatable transponders which can provide a predetermined information, e.g. ID-information.

However, the field of application of known wirelessly interrogatable sensors is limited to one particular purpose for each sensor.

### Summary of the invention

It is, for this reason, an object of the present invention to provide an electro-acoustic component that can be interrogated wirelessly and that provides a basis for a plurality of practically applicable, commercially viable sensors. It is another object of the present invention to provide an electro-acoustic transponder comprising such an electro-acoustic component and a sensing element. Such a transponder can be utilized as a wirelessly interrogatable sensor for a plurality of physical quantities.

For that purpose, an electro-acoustic component according to claim 1 and an electro-acoustic transponder comprising such an electro-acoustic component are provided. Dependent claims provide preferred embodiments of the invention.

An electro-acoustic component comprises a piezoelectric substrate, a first electro-acoustic transducer, and a piezoelectric layer. The piezoelectric substrate has an acoustic track. The first electro-acoustic transducer is arranged in the acoustic track. The piezoelectric layer is arranged on the piezoelectric substrate. The piezoelectric layer is coupled to the acoustic track.

In this context, an acoustic track is defined as the area of a piezoelectric material which is provided for acoustic waves to propagate. Conventional acoustic tracks of components working with acoustic waves comprise electro-acoustic transducers, reflectors and/or means for confining acoustic waves within the acoustic track.

The first electro-acoustic transducer can transform RF signals into acoustic waves. For that purpose, the electro-acoustic transducer can comprise bus bars and electrode fingers connected to the bus bars and arranged perpendicular to the direction of propagation of the excited acoustic waves.

The conditions under which acoustic waves propagate in a piezoelectric medium depend on parameters such as temperature or pressure the substrate is exposed to. In general, the conditions depend on stiffness parameters of the substrate such as Young's modulus or the substrate's shear modulus or inertia (e.g. adsorption or absorption of mass). As a consequence, physical quantities that alter these parameters can be measured. In SAW (SAW = surface acoustic wave) devices comprising a reflective delay line, an RF signal sent to the SAW device is converted into surface acoustic waves. These waves propagate along the surface of the device until they are reflected by discontinuities. The reflected waves are then back-converted into an RF signal. This second RF signal thus contains information about the sum of factors affecting the wave propagation. What is problematic in known sensors working with SAWs is the low sensitivity of the material's parameters with respect to the external conditions other than e.g. temperature, strain, and additional mass. Especially known sensors have problems sensing electric and/or magnetic fields.

It was found that an additional piezoelectric layer coupled to the acoustic track increases the sensitivity of a respective sensor.

The piezoelectric layer can be deposited directly onto the piezoelectric substrate. The piezoelectric layer can be located above the piezoelectric substrate without direct contact to the piezoelectric substrate. This is possible if the piezoelectric layer is deposited on an additional layer or a stack of layers. However, the piezoelectric layer or at least a section of the piezoelectric layer is located above the acoustic track.

The piezoelectric layer affects the propagation of the acoustic waves in the acoustic track. In other words: acoustic waves propagate differently in an acoustic track comprising a piezoelectric layer on or above a piezoelectric substrate compared to a piezoelectric substrate alone. As a result of the additional piezoelectric layer, a response signal of the electro-acoustic component can carry information about a physical quantity of the environment of the component with a higher precision.

It is possible that the electro-acoustic component provides precise information in the time domain or in the frequency domain.

The piezoelectric substrate can comprise lithium niobate or lithium tantalate. The lithium niobate substrate can have a Y+128° cut. In another embodiment, the piezoelectric substrate can comprise a layer structure comprising AlN layers on a sapphire substrate.

Various deposition techniques, including PVD (physical vapor deposition) or CVD (chemical vapor deposition) techniques, and sol-gel methods can be used to realize the piezoelectric layer.

The electrode fingers can comprise metal such as aluminum, copper, gold, tungsten, platinum, palladium, iridium or silver. The electrodes can be patterned by photolithography methods. Platinum is characterized by good electrical conductivity and a high density. Thus, the change in acoustic impedance of platinum transducers is relatively high, and a high reflection coefficient can be obtained.

Thus, a fully passively working wireless interrogatable device can be obtained that can be comprised by a transponder. In one embodiment, at least a section of the piezoelectric layer is arranged in the acoustic track.

Acoustic waves emitted by the first electro-acoustic transducer cross the respective section of the piezoelectric layer. The influence of the piezoelectric layer leading to a better sensitivity of the component can be optimized when the piezoelectric layer is deposited directly onto a surface of the acoustic track of the electro-acoustic component.

In one embodiment, the piezoelectric layer is arranged above or directly onto the piezoelectric surface. Arranged above means that one or more further layers can be arranged between the substrate and the piezoelectric layer.

In one embodiment, the component comprises a second acoustic track. The second acoustic track may be arranged next to the acoustic track. The second acoustic track can also comprise a section of the piezoelectric layer. However, it is possible that the second acoustic track does not contain any part of the piezoelectric layer.

The second acoustic track can be a conventional acoustic track as already discussed above and provide temperature, pressure or ID information, e.g. by comprising reflector structures encoding ID information. Then, the electro-acoustic component can provide information about a physical quantity measured via the first acoustic track and further ID information, temperature or pressure information via the second acoustic track. Via the ID information, the sensor responses can be unambiguously assigned to a specific sensor.

Instead of reflector elements on the piezoelectric layer the piezoelectric layer can comprise an edge at at least one side of the layer. The edge reflects acoustic waves when the acoustic track is in use. Of course more than one edge as a reflection center is possible.

In one embodiment, the component comprises a bottom electrode arranged between the surface of the piezoelectric substrate and the piezoelectric layer. Via the bottom electrode, the piezoelectric layer may be coupled to another sensor element. The other sensor element can be connected to the bottom electrode via a signal line. Then, an electric signal, e.g. an electric potential or an electric current, can be transmitted to the bottom electrode. The potential or current can change physical properties of the piezoelectric layer, e.g. via the piezoelectric effect. As the acoustic waves of the component cross the piezoelectric layer, information transmitted from the sensor to the piezoelectric layer can be encoded in the acoustic waves, which provides the possibility of transmitting this information to an external wirelessly interrogating terminal communicating with the component.

In one embodiment, the component comprises a top electrode arranged above or directly on the piezoelectric layer.

Then, the signal can be transmitted from the sensor to the top electrode, too.

In a component where the piezoelectric layer is sandwiched between a top electrode and a bottom electrode, a voltage can be transmitted from the external sensor to the piezoelectric layer. The piezoelectric layer interacts with the voltage and provides a path to the acoustic waves where the acoustic waves' medium has properties that depend on the voltage, e.g. stiffness, permittivity or piezoelectricity.

It is, for example, possible that voltages applied to the piezoelectric layer cause it to strain. These strains are mechanically transmitted to the propagating medium, the piezoelectric substrate. At the same time, the piezoelectric layer is a part of the propagating medium itself, i.e. the SAWs actually propagate in both the piezoelectric substrate and the piezoelectric layer. These strain fields have an effect on the geometrical length of the propagation path. Further, these strain fields have an effect on the material parameters such as stiffness, piezoelectric properties and permitivity properties. As a result, these strain fields manifest themselves in an effect on the wave velocity and propagations time. Interface properties between the substrate and the additional layer could also be affected by the external voltage applied to the piezoelectric layer, contributing to the overall effect.

In one embodiment, the piezoelectric layer comprises a hole. The piezoelectric layer or a section of the piezoelectric layer is sandwiched between a bottom electrode and a top electrode. The top electrode can be accessed easily. The bottom electrode can be accessed easily via the hole in the piezoelectric layer. Thus, a bond wire or another conductor can be in direct contact with the bottom electrode. Of course more than one holes in the piezoelectric layer are also possible.

In one embodiment at least one transducer is arranged on the piezoelectric layer. However, it is also possible that electrodes of the transducer are buried electrodes. That is: they are arranged between the substrate and the piezoelectric layer.

In one embodiment, the component further comprises a second transducer and/or a reflector arranged in the acoustic track. Via the second transducer, the acoustic waves can be transformed into RF signals which can be emitted from the component and which can be received by an external interrogation device. If the component comprises a reflector in the acoustic track, the acoustic waves are reflected to the first transducer and cross the section with the piezoelectric substrate once more, increasing the effect of the piezoelectric layer onto the acoustic wave and further improving the sensitivity of the component.

The reflector can be a partially reflecting reflector.

It is also possible that a second transducer acts as a reflector element. In this case, the initial acoustic waves are reflected to the first transducer and re-reflected to the second transducer. Basically, the acoustic track can be crossed n times, and each time the acoustic waves arrive at either the first or the second transducer. Part of the acoustic energy encoding sensor information is emitted to an external wireless device.

In one embodiment, therefore, the piezoelectric layer is arranged between the first transducer and the second transducer and/or the reflector. The sensitivity of the component is improved each time the area of the piezoelectric layer is crossed by the acoustic waves, although the acoustic energy is reduced due to dissipation.

In one embodiment, the piezoelectric layer has a thickness of between 0.1 µm and 10 µm. The piezoelectric layer can comprise PZT (lead zirconate titanate), PZN-PT (PZN = lead zirconium niobate , PT = lead titanate), PMT-PT (lead magnesium niobate-lead titanate), or PIN-PMN-PT (lead indium niobate-lead magnesium niobate-lead titanate). The piezoelectric layer can contribute to the acoustic wave propagation medium, i.e. the piezoelectric layer and the surface of the piezoelectric substrate form the medium of propagation for the acoustic waves.

In one embodiment, the piezoelectric layer induces a change in an amplitude, phase, frequency and/or propagation time of the acoustic waves. Any of these induced changes results in a modulated transmitted RF signal. A respective RF receiving terminal can decode the RF signal and restore the amplitude, phase, frequency and/or propagation time information of the acoustic wave.

The acoustic waves can be surface acoustic waves (SAW), bulk acoustic waves (BAW) or guided bulk acoustic waves (GBAW). If the acoustic waves are GBAW, then the above described layer system can be covered with one or more layers, e.g. wave guiding layers, that are arranged in such a way that a GBAW-component is obtained.

In one embodiment, therefore, the acoustic track is configured to conduct surface acoustic waves or guided bulk acoustic waves.

In one embodiment, the component further comprises electrode fingers in the acoustic track encoding ID information. It is possible that the electrode fingers act as reflecting elements and are arranged in the acoustic track or in another acoustic track which is provided for encoding ID information and/or pressure information and/or temperature information.

The invention also provides an electro-acoustic transponder comprising one of the above described electro-acoustic components. The electro-acoustic transponder further comprises an input port for receiving an RF signal and an output port for transmitting a modulated RF signal. The input port is electrically connected to the first transducer of the component. Thus, an electro-acoustic transponder is obtained that comprises the electro-acoustic component, the component having a very high sensitivity for providing information about physical quantities and the technical means for communication with external wireless terminals.

It is possible that the output port and the input port are identical. In this case, the input port acts as the output port and transmits the modulated RF signal.

In one embodiment, the transponder further comprises an antenna connected to the input port and a sensor connected to the piezoelectric layer of the piezoelectric component.

In one embodiment of this transponder, the sensor is selected from: a thermocouple, a piezoelectric accelerometer, a Hall sensor, a potentiometric chemical sensor, a sensor comprising pH-sensitive glass electrodes, a sensor comprising a coil. Then, the transponder can transmit signals carrying information about temperature, acceleration, the direction of magnetic fields, the constitution of the chemical environment, the pH-value and/or information about the strength of a magnetic field.

In one embodiment, the sensor is a thermocouple of the K-type or of the N-type. When aiming at high temperatures, it is possible to use thermocouples of the R-type, the S-type or the B-type which would allow the detection of temperatures up to 1700 °C.

The operation frequency range of a transponder can be in a frequency band that does not overlap with frequency bands for mobile communication. A possible operating frequency for transponders is in the vicinity of 2.45 GHz.

Examples of the electro-acoustic component and of the transponder showing the basic working principles of the invention are shown in the figures.

### Short description of the drawings

- FIG. 1: shows an electrical component comprising a transducer and a piezoelectric layer on a piezoelectric substrate.
- FIG. 2: shows a transponder comprising a first and a second transducer.
- FIG. 3: shows a transponder comprising a reflector.
- FIG. 4: shows a transponder comprising a second acoustic track.
- FIG. 5: shows a transponder comprising two top electrodes.
- FIG. 6: shows a transponder comprising a hole in the piezoelectric layer.
- FIG. 7: shows a transponder being connected to a sensor via a signal path.
- FIG. 8: schematically illustrates the mutual influences of the respective elements of the component.

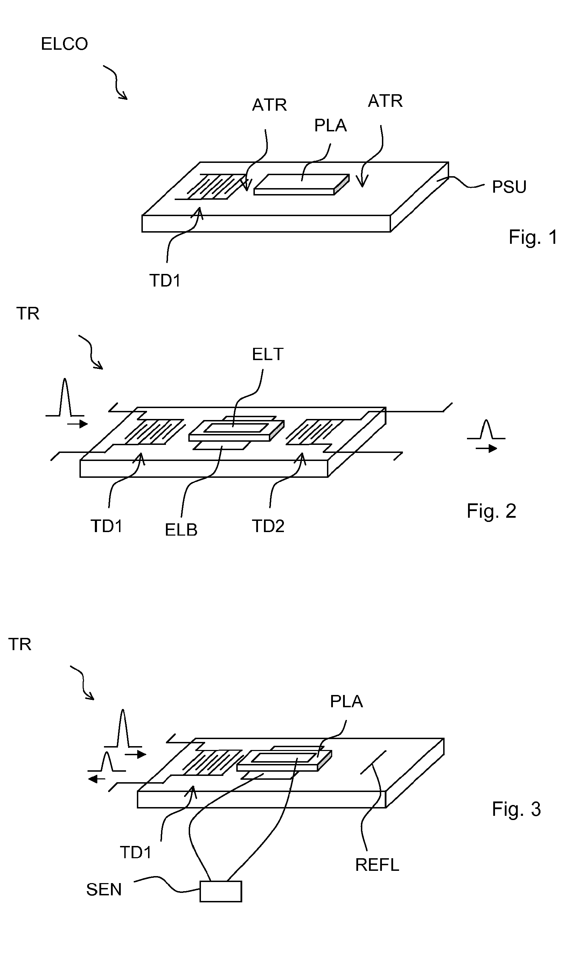

FIG. 1 shows an embodiment of an electro-acoustic component ELCO comprising a piezoelectric substrate PSU. A first transducer TD1 is arranged on the piezoelectric substrate PSU. A piezoelectric layer PLA is arranged next to the first transducer TD1 on the piezoelectric substrate PSU. The first transducer TD1 and the piezoelectric layer PLA are arranged in an acoustic track ATR of the electro-acoustic component ELCO.

Acoustic waves emitted from the first transducer TD1 cross the area of the piezoelectric layer PLA. The piezoelectric layer PLA has an influence on the physical properties determining the mode and the details of propagation of the surface acoustic waves. Thus, it is possible to imprint information into the acoustic waves via the piezoelectric layer PLA.

FIG. 2 shows an embodiment of a transponder TR comprising a first transducer TD1 and a second transducer TD2, both arranged on a piezoelectric substrate. The first transducer TD1 can be connected to an input terminal for receiving an input RF signal. The piezoelectric layer PLA is arranged between the first transducer TD1 and the second transducer TD2. Acoustic waves propagating from the first transducer TD1 to the second transducer TD2 cross the area of the piezoelectric layer. The piezoelectric layer is sandwiched between a bottom electrode ELB and a top electrode ELT. Characteristic properties of the piezoelectric layer can be adjusted by a voltage supplied to the electrodes ELB and ELT. The details of propagation of the surface acoustic waves from the first transducer TD1 to the second transducer TD2 depend on the properties of the piezoelectric layer and, thus, on the voltage applied to the electrodes ELB and ELT. As a result, it is possible to encode information into the traveling acoustic waves via a voltage applied to the electrodes. The acoustic waves carrying the respective information are converted into an RF signal via the second transducer TD2. Thus, a wirelessly interrogatable transponder TR is obtained. The first and second transducers TD1, TD2 can be conventional transducers such as interdigital transducers known from conventional surface acoustic wave devices.

FIG. 3 shows an embodiment of a transponder TR where the piezoelectric layer PLA is arranged between the first transducer TD1 and the reflector REFL. The reflector REFL can comprise structured electrode fingers, the fingers comprising a material with an acoustic impedance different from the substrate's or layer's acoustic impedance. The reflector REFL may comprise the same material as the transducers. The number of electrode fingers can be optimized to fulfill the reflection requirements. However, gratings within the piezoelectric substrate as reflectors REFL are possible as well.

An RF signal may be transformed into acoustic waves via the first transducer TD1. The acoustic waves travel along the acoustic track having at least a section of the piezoelectric layer PLA. Then, the acoustic waves are reflected at the reflector REFL and enter the first transducer TD1. Accordingly, the first transducer TD1 transforms the acoustic waves into an RF signal that can be transmitted via a transmission antenna or via the antenna with which the original RF signal was received.

The piezoelectric layer PLA is sandwiched between a bottom electrode and a top electrode which are connected to a sensor SEN. The sensor SEN may be a device that converts a physical quantity into an electrical signal, e.g. an electrical voltage or an electrical current. The electrical signal from the sensor SEN modulates the physical properties of the piezoelectric layer PLA. As a result, the acoustic waves are modulated by means of the piezoelectric layer PLA. The transmitted response signal of the transponder TR thus contains information provided by the sensor SEN related to a physical quantity. Thus, the transponder TR acts as a wirelessly interrogatable sensor.

The sensor SEN may be a passive sensor without a power supply or an active sensor with a power supply. The sensor SEN can, for example, be a thermocouple without the need for a power supply.

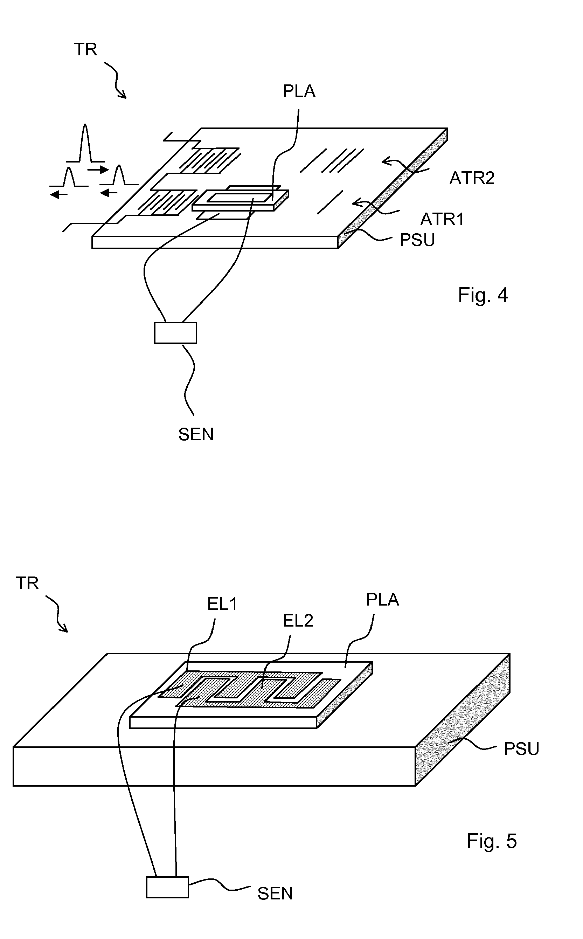

FIG. 4 shows an embodiment of the transponder TR comprising a second acoustic track ATR2 next to a first acoustic track ATR, the track being coupled to the piezoelectric layer. Such a transponder can provide information about the physical quantity via the sensor SEN and the piezoelectric layer PLA. However, the transponder TR of FIG. 4 can also provide additional information, e.g. ID information, via the second acoustic track ATR2. Therefore, the second acoustic track ATR2 can comprise a plurality of reflector elements, and the second acoustic track ATR2 can be a reflective delay line type SAW element. The acoustic track ATR2 shown in Figure 4 as an example comprises reflecting elements encoding the digital number "1 0 1 1 1", where the "0" is represented by the empty space between the first finger and the four fingers representing the digits "1".

The transducers of both acoustic tracks ATR1, ATR2 can be connected to the same antenna, which may be an input/output antenna. Then, depending on the length of the acoustic tracks, two output signals can be emitted as a response to an input signal. One output signal encodes a physical quantity via the sensor SEN and the piezoelectric layer PLA. The second output signal can provide ID information, temperature information or pressure information via the second acoustic track.

FIG. 5 shows an embodiment of a transponder TR comprising two top electrodes EL1, EL2 on the piezoelectric substrate PLA. The electrodes EL1, EL2 are interdigitated electrodes and can allow for higher strain fields in the piezoelectric layer PLA when the piezoelectric layer is ferroelectric.

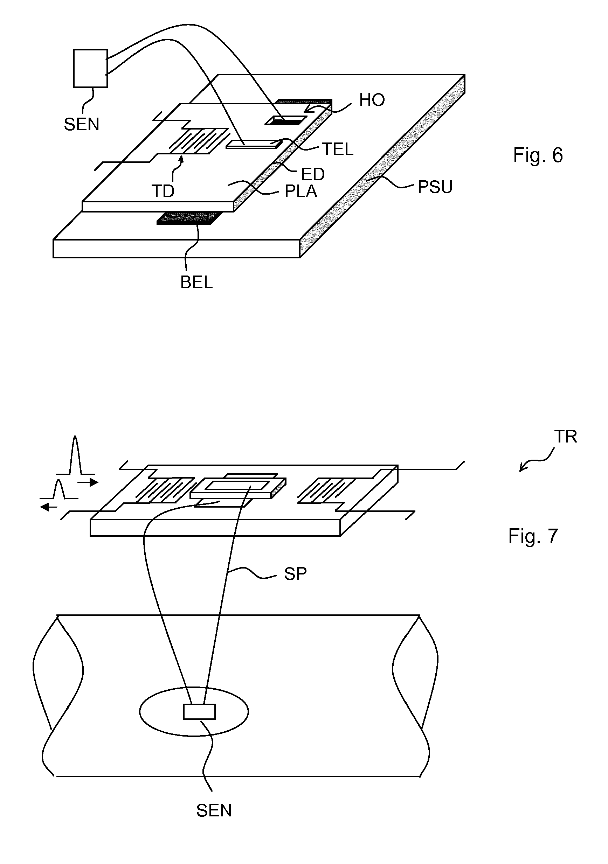

FIG. 6 shows an embodiment where the piezoelectric layer PLA comprises a hole HO. An electrical connection can be conducted through the hole to connect the bottom electrode BEL below the piezoelectric layer. Such an electrical connection can for example be established by a bond wire.

Further, the piezoelectric layer can have an edge ED as a reflection center for electroacoustic waves. Then, no additional structured reflectors are needed.

The transducer TD can be arranged on or above the piezoelectric layer.

FIG. 7 shows an embodiment of a transponder TR where a bottom electrode and a top electrode of the respective electro-acoustic component are coupled via a signal path to a sensor SEN. The sensor SEN can comprise a thermocouple for temperature measurement. The signal path SP can comprise a wired connection, e.g. via cable or via structured signal lines or bond wires. The sensor can, for instance, be connected to a tube for measuring the temperature of a liquid being conducted in the tube.

Thus, a device for wireless sensing of high temperatures is provided. Temperatures can exceed 1000 °C, as the transponder is not in direct contact with the object the temperature of which has to be measured. It is possible that the transponder is mounted on the outer wall of a pipe or tube where the temperature is such that a suitably designed electro-acoustic transponder may be operated over a prolonged period of time.

It is possible that electrodes sandwiching the piezoelectric layer are connected to a remote temperature sensor such as a thermocouple. It is further possible that the electro-acoustic component comprises another acoustic track for obtaining temperature information at the side of the component itself. In this way, by knowing both temperatures and by combining both pieces of temperature information, a higher precision can be obtained.

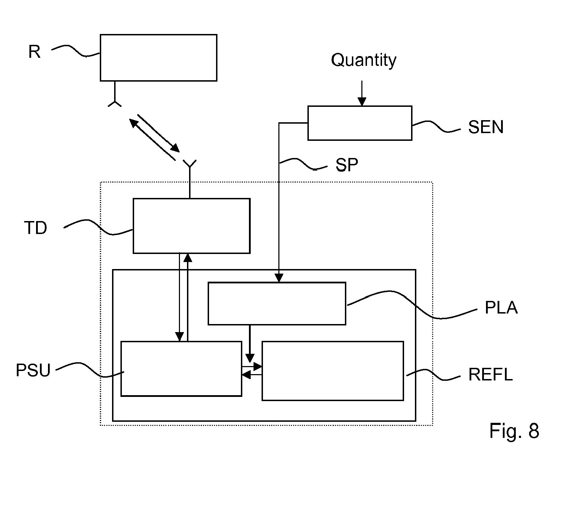

FIG. 8 schematically illustrates the working principle of the basic idea: a remote reader R communicates wirelessly via a transducer TD. The physical quantity is measured via a sensor SEN, and a signal, e.g. a voltage signal, related to the physical quantity is provided to the piezoelectric layer PLA. The signal provided by the sensor SEN manipulates the piezoelectric layer PLA in such a way that the piezoelectric layer manipulates the propagation of surface acoustic waves between a transducer and a reflector REFL in or on the surface of the piezoelectric substrate PSU. Especially, it is possible that a voltage generated by the external sensor is applied to the piezoelectric layer and affects its properties and, thus, the transponder's response signals.

### List of reference signs:

- ATR:: acoustic track
- ATR1, ATR2:: first, second acoustic track
- EL1, E12:: first, second electrode
- ELB:: bottom electrode
- ELCO:: electro-acoustic component
- ELT:: top electrode
- PLA:: piezoelectric layer
- PSU:: piezoelectric substrate
- R:: external reader
- REFL:: reflector
- SEN:: sensor
- SP:: signal path
- TD1:: first transducer
- TD2:: second transducer
- TR:: transponder

## Claims

1. An electro-acoustic component (ELCO), comprising
- a piezoelectric substrate (PSU) having an acoustic track (ATR),
- a first electro-acoustic transducer (TD1) arranged in the acoustic track (ATR),
- a piezoelectric layer (PLA) on the piezoelectric substrate (PSU), wherein
- the piezoelectric layer (PLA) is coupled to the acoustic track (ATR).

2. The component (ELCO) of the previous claim, wherein at least a section of the piezoelectric layer (PLA) is arranged in the acoustic track (ATR).

3. The component (ELCO) of one of the previous claims, wherein the piezoelectric layer (PLA) is arranged above or directly on the piezoelectric surface.

4. The component (ELCO) of one of the previous claims, comprising a further acoustic track (ATR2).

5. The component (ELCO) of one of the previous claims, further comprising a bottom electrode (ELB) arranged between the piezoelectric substrate (PSU) and the piezoelectric layer (PLA) .

6. The component (ELCO) of one of the previous claims, further comprising a top electrode (ELT) arranged above or directly on the piezoelectric layer (PLA).

7. The component (ELCO) of one of the previous claims, further comprising a second transducer (TD2) and/or a reflector (REFL) arranged in the acoustic track (ATR).

8. The component (ELCO) of the previous claim, wherein the piezoelectric layer (PLA) is arranged between the first transducer (TD1) and the second transducer (TD2) and/or reflector (REFL).

9. The component (ELCO) of one of the previous claims, wherein the piezoelectric layer (PLA)
- has a thickness of between 0.1 µm and 10 µm,
- comprises PZT, PZN-PT, PMN-PT or PIN-PMN-PT, and
- contributes to the acoustic waves propagation medium.

10. The component (ELCO) of one of the previous claims, wherein the piezoelectric layer (PLA) induces a change in amplitude, phase, frequency, and/or propagation time of acoustic waves.

11. The component (ELCO) of one of the previous claims, where surface acoustic waves, bulk acoustic waves or guided bulk acoustic can propagate in the acoustic track (ATR).

12. The component (ELCO) of one of the previous claims, further comprising electrode fingers in the acoustic track (ATR) encoding ID information.

13. An electro-acoustic transponder (TR), comprising
- an electro-acoustic component (ELCO) of one of the previous claims,
- an input port for receiving an RF-signal,
- an output port for transmitting a modulated RF-signal, wherein
- the input port is electrically connected to the first transducer (TD1) of the component (ELCO).

14. The transponder (TR) of the previous claim, further comprising
- an antenna connected to the input port, and
- a sensor (SEN) connected to the piezoelectric layer (PLA) of the electro-acoustic component (ELCO).

15. The transponder (TR) of the previous claim, wherein the sensor (SEN) is selected from: a thermocouple, a piezoelectric accelerometer, a Hall sensor, a potentiometric chemical sensor, a sensor comprising pH-sensitive glass electrodes, a sensor comprising a coil.
